**Europäisches Patentamt**

**European Patent Office**

**Office européen des brevets**

(19)

(11) Veröffentlichungsnummer: **0 331 800 B1**

(12) **EUROPÄISCHE PATENTSCHRIFT**

(45) Veröffentlichungstag der Patentschrift: **22.01.92**

(51) Int. Cl.⁵: **G01B 11/18**

(21) Anmeldenummer: **88119526.7**

(22) Anmeldetag: **24.11.88**

(54) **Einrichtung eines Lichtwellenleiter-Phasensensors für die Messung minimaler Dehnungen.**

(30) Priorität: **05.03.88 DE 3807306**

(43) Veröffentlichungstag der Anmeldung:
**13.09.89 Patentblatt 89/37**

(45) Bekanntmachung des Hinweises auf die
Patenterteilung:
**22.01.92 Patentblatt 92/04**

(84) Benannte Vertragsstaaten:
**BE CH DE FR GB IT LI NL SE**

(56) Entgegenhaltungen:
**DE-A- 2 602 691**
**US-A- 4 515 473**

(73) Patentinhaber: **Felten & Guilleaume Energietechnik AG
Schanzenstrasse 24-30 Postfach 80 50 01
W-5000 Köln 80(DE)**

(72) Erfinder: **Federmann, Helmut, Dr.
Holunderweg 17
W-5060 Bergisch Gladbach(DE)**
Erfinder: **Levacher, Friedrich Karl, Dr.
Medardusstrasse 24
W-5024 Brauweiler(DE)**
Erfinder: **Noack, Georg, Dr. Ing.
Eschenweg 9
W-5060 Bergisch Gladbach(DE)**
Erfinder: **Kraus, Anton, Dipl.-Ing.
Olpener Strasse 124
W-5063 Overath-Steinenbrück(DE)**

## Beschreibung

Die Erfindung betrifft die Einrichtung eines Lichtwellenleiter-(LWL-)Phasensensors für die Messung minimaler Dehnungen, wobei polarisiertes Licht in den Sensor-LWL (polarisationserhaltender, doppelbrechender Monomode-LWL) eingekoppelt und die bei einer Längenänderung des LWL auftretende Phasendifferenzänderung ermittelt wird, bestehend aus folgenden in Reihe geschalteten Teilen: Lichtsender, LWL-Leitung, LWL-Phasensensor (Baugruppe mit dem Sensor-LWL), LWL-Leitung, Lichtempfänger und Meßeinrichtung.

Mit einer solchen, in der Druckschrift EP-A2-0 267 381 beschriebenen Meßeinrichtung können Verformungen im μm-Bereich erfaßt werden. Dabei ist als LWL-Phasensensor eine Baugruppe mit folgenden in Reihe geschalteten Teilen bezeichnet: ein Polarisator, eine Einkopplung, ein polarisationserhaltender, doppelbrechender Monomode-LWL (der Sensor-LWL) und ein Analysator. In diesen LWL wird das linear polarisierte Licht eingekoppelt, und die bei einer Längenänderung des LWL auftretende Phasendifferenzänderung wird von einem Empfänger mit nachgeschalteter Meßelektronik erfaßt. Hierbei kann die Meßwertbestimmung noch verbessert werden.

Die Verbindung zwischen den in den bruchüberwachten Zonen eines Bauwerks angeordneten LWL-Phasensensoren und der im Kontrollraum angeordneten Meßeinrichtung erfolgt, wie hier, durch LWL-Leitungen, wenn die für LWL spezifischen Eigenschaften - wie Unempfindlichkeit gegen elektromagnetische Störfelder, gegen starke elektrische Felder und gegen korrosive oder explosive Umgebung - gefordert werden. Es sind jedoch auch andere Leitungsverbindungen möglich.

Daher liegt der Erfindung die Aufgabe zugrunde, die LWL-Phasensensor-Einrichtung so auszubilden, daß mit ihr eine exakte Meßwertbestimmung durchführbar ist. Ferner sind andere Leitungsverbindungen zwischen den LWL-Phasensensoren und der Meßeinrichtung anzugeben.

Diese Aufgabe wird durch die kennzeichnenden Merkmale des Anspruchs 1 bzw. 3 gelöst. Die Lösung besteht im wesentlichen darin, daß an die Stelle des einen Empfängers drei Empfänger treten, der vom LWL-Sensor kommende Lichtstrahl mittels eines Strahlteilers in drei Teilstrahlen aufgeteilt wird, und Teilstrahl 1 direkt, Strahl 2 durch eine λ/4-Platte und einen Analysator, und Strahl 3 durch einen weiteren Analysator auf den zugeordneten Empfänger trifft. Ferner können statt der optischen (LWL-) elektrische (Cu-) Verbindungsleitungen eingesetzt werden, wobei Lichtsender und -empfänger statt in der Meßeinrichtung in den LWL-Phasensensoren integriert sind.

Der 3er-Strahlteiler kann vorteilhafterweise als optischer Block ausgebildet werden, wenn eine genügend starke Lichtquelle eingesetzt ist. Andernfalls wird als Strahlteiler ein Gitter mit einer vorgeschalteten selbstfokusierenden Linse eingesetzt. Beim Teilerblock erfolgt die Auskopplung der Teilstrahlen in drei gebündelte LWL, und die Strahlenführung zu den Empfängern durch die drei LWL. Beim Gitter dagegen erfolgt letzteres durch die Luft.

Im Empfänger 1 wird die Intensität $I_0$, im Empfänger 2 wird die Intensität $I_2 = 1/2 \, I_0 \, (1 + \sin \delta)$, und im Empfänger 3 wird die Intensität $I_3 = 1/2 \, I_0 \, (1 + \cos \delta)$ bestimmt.

Der Wert $I_2$ ist notwendig, da die Funktion $1 + \cos \delta$ im Bereich von $0$ bis $\pi$ mehrdeutig ist. Durch Hinzufügen der Funktion $1 + \sin \delta$ wird die Eindeutigkeit über das Vorzeichen plus / minus erreicht.

Damit kann - und dies ist der wesentliche Vorteil der Erfindung - mit dem nachgeschalteten elektronischen Meß- und Auswertegerät eine exakte Meßwertbestimmung erfolgen.

Zwei Ausführungsbeispiele der Erfindung sind in der Zeichnung dargestellt und werden nachfolgend näher beschrieben. Es werden drei Blockschaltbilder von LWL-Phasensensor-Meßeinrichtungen gezeigt, und zwar in

- Fig. 1 die Einrichtung mit einem Empfänger und einer LWL-Verbindung zwischen LWL-Phasensensor und Meßeinrichtung gemäß der Druckschrift EP-A2-0 267 381,
- Fig. 2 die Einrichtung mit drei Empfängern gemäß der Erfindung und mit einer LWL-Hinleitung zum LWL-Phasensensor und einer dreiadrigen Cu-Rückleitung zur Meßeinrichtung, und
- Fig. 3 die Anordnung eines LWL-Phasensensors an einem zu überwachenden Brückenteil gemäß der weiteren Erfindung mit einer Cu-Leitungsverbindung zwischen LWL-Phasensensor und Meßeinrichtung.

Bezeichnet sind mit:
1 Lichtsender (Laserdiode oder Laser)
2 Polarisator
3 Einkopplung (Steckverbindung)
4 Sensor-LWL (polarisationserhaltender, doppelbrechender Monomode-LWL)
5, 52, 53 Analysatoren
6 LWL-Phasensensor (Baugruppe)
7 Lichtempfänger (Fotodiode)
71, 72, 73 Lichtempfänger (Fotodioden) 1, 2, 3
9 Meßelektronik
10 Sender-Steuerung
11 Meßeinrichtung im Kontrollraum
12 LWL-Leitung
15 Selbstfokusierende Linse
16 Gitter zur Strahlaufteilung (oder 3er-Strahlteilerblock)
17 λ/4-Platte

18 Teilstrahlen (im Fall des Teilerblocks LWL)

19 Cu-Leitung

20 Eingangsgehäuse des LWL-Phasensensors (innen Laserdiode und Einkopplung)

21 Ausgangsgehäuse des LWL-Phasensensors (innen Auskopplung und Fotodioden)

22 Brückenteil mit LWL-Phasensensor.

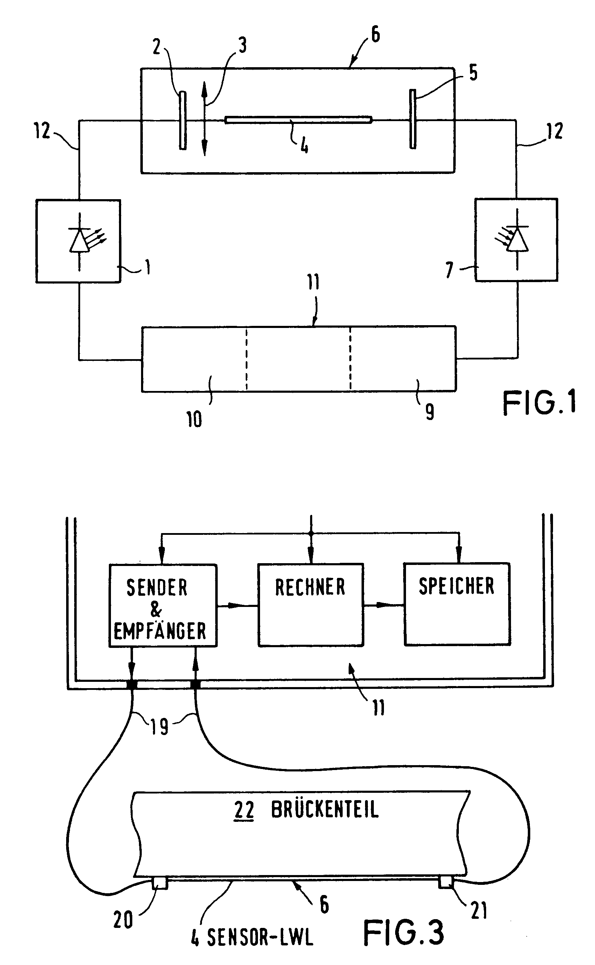

Fig. 1 zeigt das Blockschaltbild der LWL-Phasensensor-Meßeinrichtung gemäß der älteren Patentanmeldung mit dem Lichtsender 1, dem am Meßobjekt angeordneten LWL-Phasensensor 6, dem Lichtempfänger 7 und der im Kontrollraum angeordneten Meßeinrichtung 9-11. Bei der praktischen Ausführung sind Lichtsender und -empfänger in der Meßeinrichtung integriert. Die Verbindung zwischen ihr und dem LWL-Phasensensor besteht aus den LWL-Leitungen 12.

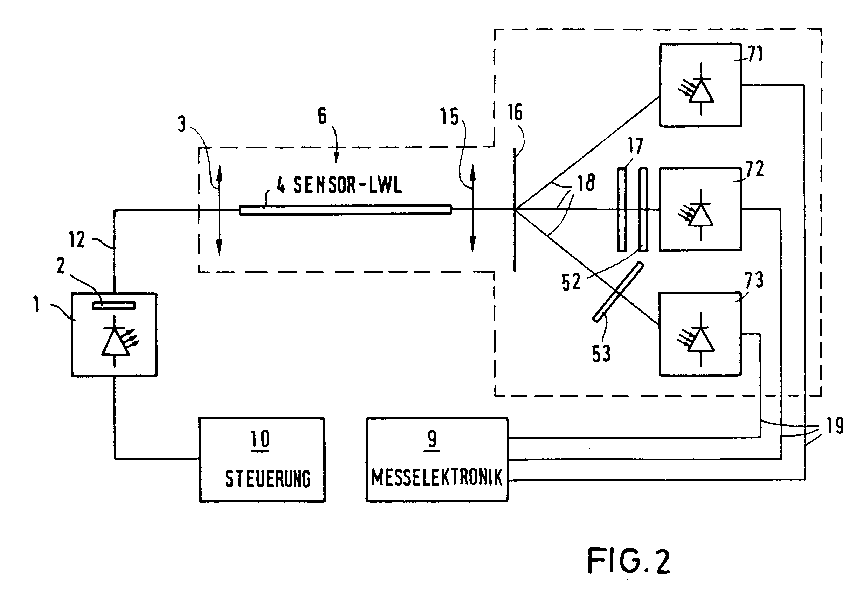

Fig. 2 zeigt dementsprechend eine Einrichtung zur verbesserten Meßwertbestimmung gemäß der Erfindung, nunmehr mit den drei Lichtempfängern (Fotodioden) 71-73. Diese sind hier in den LWL-Phasensensor 6 integriert, und ihre Verbindung mit der Meßeinrichtung 9 besteht aus der dreiadrigen Cu-Leitung 19.

Die Teilung des vom LWL-Sensor 4 kommenden Lichtstrahls (Meßstrahls) erfolgt hier mittels des Gitters 16, dem die selbstfokusierende Linse 15 vorgeschaltet ist. Die drei Teilstrahlen 18 laufen durch die Luft zu den Fotodioden 71-73, Strahl 1 direkt, Strahl 2 durch die $\lambda/4$-Platte 17 und den Analysator 52, und Strahl 3 durch den Analysator 53. Analysatoren und $\lambda/4$-Platte sind eingesetzt, um die Intensitäten des polarisierten Lichtes am Ausgang des Sensor-LWL bezüglich seiner beiden Brechungs-Extremwerte auszufiltern.

Auf diese Weise erhalten und bestimmen die Empfänger 1, 2 und 3 die oben angegebenen Intensitäten $I_{1,\ 2\ und\ 3}$, deren gemeinsame Auswertung eine exakte Meßwertbestimmung ermöglicht.

Vorteilhafterweise kann als 3er-Strahlteiler anstelle des Gitters 16 ein optischer Strahlteiler-Block (nicht dargestellt) eingesetzt werden, wobei die selbstfokusierende Linse 15 entfällt. Im Teilerblock erfolgt die Auskopplung des vom (durch den) Sensor-LWL 4 kommenden Lichtstrahls in drei gebündelte LWL, und die Führung der Teilstrahlen 18 zu den Empfängern 71-73 erfolgt nun durch diese LWL. Alle anderen Bauelemente bleiben gleich.

Fig. 3 schließlich zeigt die Anordnung eines LWL-Phasensensors an einem zu überwachenden Brückenteil. Hier besteht die Verbindung zwischen dem LWL-Phasensensor 6 am Brückenteil 22 und der Meßeinrichtung 11 im Kontrollraum aus den Cu-Leitungen 19, und der LWL-Phasensensor ist wie folgt aufgebaut: Am einen Ende befindet sich ein kleines (Seitenlängen im cm-Bereich), quaderförmiges Metallgehäuse (das Eingangsgehäuse 20) für Steckverbinder, Laserdiode, Polarisator und Einkopplung. (Der Polarisator entfällt, wenn der Lichtsender bereits polarisiertes Licht aussendet.) Daran schließt der langgestreckte (Länge im m-Bereich), in Kunststoff eingebettete Sensor-LWL 4 an. Und am anderen Ende befindet sich ein ähnliches Gehäuse (das Ausgangsgehäuse 21) für Analysator, Fotodiode (oder Strahlteiler, Analysatoren, $\lambda/4$-Platte und Fotodioden) und Steckverbinder. Der ganze LWL-Phasensensor kann auf einer leichten Trageschiene vormontiert werden.

Die elektrischen Leitungen 19 führen zu der in einem Schutzgehäuse untergebrachten Meßeinrichtung 11, genauer zum elektrischen Sender bzw. Empfänger. Von dort werden die Meßwerte in einen Rechner (EMUF) und weiter in einen Speicher (EPROM) gegeben. Alle drei Einheiten werden elektrisch von einem Akkumulator über ein stabilisiertes Netzteil versorgt. Dieser Meßeinrichtung ist eine Auswerteeinrichtung nachgeordnet, die aus den Einheiten: EPROMMER, Rechner und Speicher/Drucker besteht.

**Patentansprüche**

1. Einrichtung eines Lichtwellenleiter-(LWL-)Phasensensors für die Messung minimaler Dehnungen, wobei polarisiertes Licht in den Sensor-LWL eingekoppelt und die bei einer Längenänderung des LWL auftretende Phasendifferenzänderung ermittelt wird, bestehend aus folgenden in Reihe geschalteten Teilen: Lichtsender, LWL-Leitung, LWL-Phasensensor, LWL-Leitung, Lichtempfänger und Meßeinrichtung, dadurch gekennzeichnet, daß drei Lichtempfänger (Fotodioden 71-73) eingesetzt sind und an das Ende des Sensor-LWL (4) ein 3er-Strahlteiler (16) angeschlossen ist, von dem aus die drei Teilstrahlen (18) wie folgt geführt sind: Strahl 1 direkt zum Empfänger 1 (71), Strahl 2 durch eine $\lambda/4$-Platte (17) und einen Analysator (52) zum Empfänger 2 (72), und Strahl 3 durch einen weiteren Analysator (53) zum Empfänger 3 (73).

2. Meßeinrichtung nach Anspruch 1, dadurch gekennzeichnet, daß der 3er-Strahlteiler als optischer Block - oder als Gitter (16) mit einer vorgeschalteten selbstfokusierenden Linse (15) - ausgebildet ist, wonach die Führung der Teilstrahlen (18) nach dem Teilerblock durch drei - im Block gebündelte - LWL, dagegen beim Gitter durch die Luft erfolgt.

3. Meßeinrichtung nach Anspruch 1 oder 2, dadurch gekennzeichnet, daß die Verbindung zwischen den in den bruchüberwachten Zonen eines Bauwerks angeordneten LWL-Phasensensoren (6) und der im Kontrollraum angeordneten Meßeinrichtung (11) aus optischen oder elektrischen Leitungen (12 bzw. 19) besteht, wobei Lichtsender und -empfänger (1 bzw. 7) dementsprechend in der Meßeinrichtung oder in den LWL-Phasensensoren integriert sind.

4. Meßeinrichtung nach Anspruch 3, dadurch gekennzeichnet, daß im Fall von elektrischen Verbindungsleitungen (19) der LWL-Phasensensor (6) wie folgt aufgebaut ist:
   - am einen Ende in einem kleinen, quaderförmigen Metallgehäuse (20): Steckverbinder, Laserdiode, Polarisator und Einkopplung,
   - anschließend der langgstreckte, in Kunststoff eingebettete Sensor-LWL (4),
   - und am anderen Ende in einem ähnlichen Gehäuse (21): Analysator, Fotodiode - oder Strahlteiler, Analysatoren, $\lambda$/4-Platte und Fotodioden - und Steckverbinder.

## Claims

1. A light wave guide phase sensor device for measuring minimum expansions, wherein polarised light is directed into the sensor light wave guide and the change in the phase difference which occurs at a change in the length of the light wave guide is obtained, consisting of the following parts connected in series: light transmitter, light wave guide conductor, light wave guide phase sensor, light wave guide conductor, light receiver and measuring device, characterised in that three light receivers (photodiodes 71 - 73) are installed, and a triple beam divider (16) is connected to the end of the sensor light wave guide (4) from which the three part beams (18) are guided as follows: beam 1 direct to the receiver 1 (71), beam 2 through a $\lambda$/4 plate (17) and an analyzer (52) to the receiver 2 (72), and beam 3 through a further analyzer (53) to the receiver 3 (73).

2. A measuring device according to claim 1, characterised in that the triple beam divider is designed as an optical block - or as a grid (16) with a self-focusing lens (15) connected before it - , after which the part beams (18) are guided after the dividing block by three light wave guides - concentrated in the block - , whereas with the grid they are guided through the air.

3. A measuring device according to claim 1 or 2, characterised in that the connection between the light wave guide phase sensors (6) disposed in the break-monitored zones of a structure and the measuring device (11) disposed in the control space consists of optical or electrical lines (12 and 19 respectively), wherein the light transmitter and receiver (1 and 7 respectively) are accordingly integrated in the measuring device or in the light wave guide phase sensors.

4. A measuring device according to claim 3, characterised in that in the case of electrical connection lines (19), the light wave guide phase sensor (6) is constructed as follows:
   - at one end in a small, parallelepiped-shaped metal housing (20): plug-in connector, laser diode, polarizer and coupling,
   - then the elongated sensor light wave guide (4) embedded in synthetic material,
   - and at the other end in a similar housing (21): analyzer, photodiode - or beam divider, analyzers, $\lambda$/4 plate and photodiodes - and plug-in connector.

## Revendications

1. Dispositif pour la mesure d'allongements minimaux avec un capteur de phase à fibres optiques, avec injection de lumière polarisée dans le capteur à fibres optiques et détection des variations de différence de phases engendrées par une variation de longueur des fibres optiques, ce dispositif se composant des éléments suivants montés en série : photo-émetteur, guide de lumière à fibres optiques, capteur de phase à fibres optiques, guide de lumière à fibres optiques, photo-récepteur et installation de mesure, caractérisé en ce que :
   il comporte trois photo-capteurs (photo-diodes 71-73) et un diviseur de faisceau en trois parties (16) relié à l'extrémité du capteur à fibres optiques (4), ce diviseur fournissant trois faisceaux partiels (18) dirigés comme suit : le rayon 1 va directement sur le capteur 1 (71), le rayon 2 traverse une plaque quart d'onde ($\lambda$/4, 17) et un analyseur (52) pour arriver sur le récepteur 2 (72) et le troisième faisceau traverse un autre analyseur (53) pour arriver sur le récepteur 3 (73).

2. Dispositif de mesure selon la revendication 1, caractérisé en ce que le diviseur de faisceau en trois parties est constitué par un bloc optique ou un réseau (16) précédé d'une lentille (15) auto-focalisante, et le guidage des faisceaux partiels (18) en aval du bloc diviseur se fait par trois guides de lumière à fibres optiques regroupés dans le bloc alors que dans le réseau, la transmission se fait à travers l'air.

3. Dispositif de mesure selon la revendication 1 ou 2, caractérisé en ce que la liaison entre les capteurs de phase à fibres optiques (6) placés dans les zones surveillées d'une construction et le dispositif de mesure (11) placé dans une salle de commande est assuré par des lignes optiques ou électriques (12, 19), le photo-émetteur et le photorécepteur (1, 7) étant intégrés de manière appropriée dans le dispositif de mesure ou dans les capteurs de phase à fibres optiques.

4. Dispositif de mesure selon la revendication 3, caractérisé en ce que dans le cas de lignes de liaison électriques (19), le capteur de phase à fibres optiques (6) est réalisé comme suit :
    - à une extrémité dans un boîtier métallique rectangulaire (20) de petites dimensions : liaison par connecteur, diode-laser, polariseur et coupleur d'injection,
    - puis le capteur à fibres optiques (4) allongé, noyé dans de la matière synthétique,
    - et à l'autre extrémité, dans un boîtier analogue (21) : l'analyseur, la photo-diode ou le diviseur de faisceau, les analyseurs, la plaque quart d'onde ($\lambda/4$) et les photo-diodes ainsi que les connecteurs d'enfichage.

FIG.1

SENDER & EMPFÄNGER

RECHNER

SPEICHER

22 BRÜCKENTEIL

4 SENSOR-LWL

FIG.3

FIG.2

EP 0 331 800 B1